# EUROPÄISCHE PATENTANMELDUNG

(11) **EP 4 275 912 A1**
(43) Veröffentlichungstag der Anmeldung: **15.11.2023**
(21) Anmeldenummer: 22172504.7
(22) Anmeldetag: 10.05.2022
(51) Int. Cl.: B42D 25/324, B42D 25/328, B42D 25/351, B42D 25/36, B42D 25/373

(54) **SICHERHEITSELEMENT**

(71) Anmelder: Hueck Folien Gesellschaft m.b.H., 4342 Baumgartenberg (AT)
(72) Erfinder: Trassl, Stephan, 4342 Baumgartenberg (AT); Fuchsbauer, Anita, 4030 Linz (AT)
(74) Vertreter: KLIMENT & HENHAPEL

(57) **Zusammenfassung**

Die vorliegende Erfindung betrifft ein Sicherheitselement (1) mit optischen Sicherheitsmerkmalen, geeignet für die Anordnung auf einem flächigen Träger (2), umfassend eine Mottenaugenstruktur (3) und eine Schicht zur Erzeugung eines ersten Farbkippeffekts (4), wobei das Sicherheitselement weiters eine reflektierende Schicht (6) aufweist, welche reflektierende Schicht (6) zumindest abschnittsweise direkt auf der Mottenaugenstruktur (3) angeordnet ist und die Schicht zur Erzeugung eines ersten Farbkippeffekts (4) zumindest abschnittsweise überlappend mit der auf der Mottenaugenstruktur (3) angeordneten reflektierenden Schicht (6) angeordnet ist, und wobei die Schicht zur Erzeugung eines ersten Farbkippeffekts (4) eine Dünnschichtanordnung ist, umfassend zumindest eine auf der reflektierenden Schicht (6) angeordnete dielektrische Schicht (5) als Abstandsschicht und eine auf der dielektrischen Schicht angeordnete Absorberschicht (8).

## Beschreibung

### GEBIET DER ERFINDUNG

Die vorliegende Erfindung betrifft ein Sicherheitselement mit optischen Sicherheitsmerkmalen, geeignet für die Anordnung auf einem flächigen Träger, umfassend eine Mottenaugenstruktur und eine Schicht zur Erzeugung eines ersten Farbkippeffekts.

### STAND DER TECHNIK

Aus dem Stand der Technik sind bereits Sicherheitselemente bekannt, die zur Erhöhung der Fälschungssicherheit ein optisches Element zur Erzeugung eines Farbkippeffekts aufweisen, wie etwa eine Dünnschichtanordnung, die mittels Dünnschichtinterferenz einen Farbkippeffekt bewirkt. Je nach Schichtdicke kann der Farbkippeffekt unterschiedliche typische Farbenpaare erzeugen, etwa von Grün auf Blau oder von Magenta auf Grün.

Bekannt ist beispielweise auch ein Farbkippeffekt vom Farbeindruck Schwarz auf einen beliebigen Farbeindruck, wobei ein solcher Farbkippeffekt durch die Verwendung von Mottenaugenstrukturen mit diffraktivem Verhalten erreicht werden kann. Das Unternehmen Toppan^{®} etwa vertreibt unter dem Namen Asterium^{®} eine Mottenaugenstruktur, welche im steilen Betrachtungswinkel schwarz und beim Kippen zu einem flachen Betrachtungswinkel farbig erscheint.

Aus der EP 2 676 802 B1 ist für ein Sicherheitselement eine Mottenaugenstruktur bekannt, die als Absorber verwendet wird, um die Helligkeit eines Bildes zu variieren, indem die Mottenaugenstruktur in der Fläche des Sicherheitselements neben Beugungsstrukturen angeordnet wird.

### AUFGABE DER ERFINDUNG

Eine Aufgabe der Erfindung ist es, ein Sicherheitselement mit optischen Sicherheitsmerkmalen bereitzustellen, wobei ein Farbkippeffekt zwischen untypischen Farbenpaaren erzeugt wird, wodurch die Fälschungssicherheit des Sicherheitselements erhöht wird.

### DARSTELLUNG DER ERFINDUNG

Die Aufgabe der Erfindung wird durch ein Sicherheitselement mit optischen Sicherheitsmerkmalen, geeignet für die Anordnung auf einem flächigen Träger umfassend eine Mottenaugenstruktur und eine Schicht zur Erzeugung eines ersten Farbkippeffekts, gelöst, wobei erfindungsgemäß vorgesehen ist, dass das Sicherheitselement weiters eine reflektierende Schicht aufweist, welche reflektierende Schicht zumindest abschnittsweise direkt auf der Mottenaugenstruktur angeordnet ist und die Schicht zur Erzeugung eines ersten Farbkippeffekts zumindest abschnittsweise überlappend mit der auf der Mottenaugenstruktur angeordneten reflektierenden Schicht angeordnet ist, und dass die Schicht zur Erzeugung eines ersten Farbkippeffekts eine Dünnschichtanordnung ist, umfassend zumindest eine auf der reflektierenden Schicht angeordnete dielektrische Schicht als Abstandsschicht und eine auf der dielektrischen Schicht angeordnete Absorberschicht. Mit einer Dünnschichtanordnung können besonders vielfältige Farbkippeffekte erzeugt werden. Die Dünnschichtanordnung bewirkt dabei mittels Dünnschichtinterferenz einen Farbkippeffekt.

Mottenaugenstrukturen werden im Stand der Technik auf Grund ihrer lichtabsorbierenden Eigenschaft zur Entspiegelung und Verhinderung von Reflexionen in vielen Bereichen verwendet und sind daher im Stand der Technik bereits bekannt. Mottenaugenstrukturen können durch unterschiedliche bereits bekannte Verfahren, wie durch Prägen, Ätzen und ähnliches, beispielsweise auf einer Lackbasis, hergestellt werden. Prinzipiell handelt es sich bei einer Mottenaugenstruktur um eine Mikrostruktur mit (pseudo)periodischer, beispielsweise konischer oder sinusförmiger, Struktur. Die Mottenaugenstruktur kann in Form eines Beugungsgitters auf einem Träger angeordnet sein, wobei hierbei beispielsweise lineare, circuläre Gitter, aber auch Kreuzgitter in Betracht kommen. Selbstverständlich ist nicht ausgeschlossen, dass die Mottenaugenstruktur eine andere Struktur aufweist.

Bevorzugt wird die Mottenaugenstruktur mit Hilfe einer Prägelackschicht gebildet, welche etwa im Wesentlichen aus Nitrocellulose, Acrylaten sowie deren Copolymeren, Polyamiden sowie deren Copolymeren, Polyvinylchloriden sowie deren Copolymeren besteht. Die Mottenaugenstruktur wird dabei vorzugsweise aus einem vernetzbaren bzw. vernetzten Lack hergestellt.

Um zu erreichen, dass die Mottenaugenstruktur Licht im sichtbaren Bereich absorbiert, ist vorgesehen, dass die Strukturperiode gleich der oder vorzugsweise kleiner als die Wellenlänge des sichtbaren Lichts ist, so dass die Reflexion der Strahlung möglichst verhindert wird.

Eine Mottenaugenstruktur, wie sie bei der gegenständlichen Erfindung verwendet wird, erscheint dem Betrachter nur in einem steilen Betrachtungswinkel dunkel bis annähernd schwarz, während sie in einem flachen Betrachtungswinkel auf Grund einer vorhandenen Periodizität einen diffraktiven optischen Effekt aufweist und dadurch farbig erscheint. Die gegenständliche Mottenaugenstruktur zeigt daher einen Farbkippeffekt von schwarz auf farbig. Die reflektierende Schicht dient grundsätzlich dazu, die Mottenaugenstruktur in einem Schichtaufbau quasi "sichtbar" zu machen, also den Unterschied im Brechungsindex zu anderen Schichten zu erhöhen. Die reflektierende Schicht wirkt zudem als Verstärker für den Interferenzeffekt, der durch die dielektrische Schicht und die Absorberschicht der Dünnschichtanordnung bewirkt wird. Bei steilem Betrachtungswinkel wird aber ein Teil des Lichts der Dünnschichtanordnung von der Mottenaugenstruktur verschluckt, wodurch die Farbe der Dünnschichtanordnung, die durch Interferenz erzeugt wird, schwächer und/oder weniger glänzend erscheint als wenn keine Mottenaugenstruktur unter der Dünnschichtanordnung vorhanden wäre. Je nach Ausbildung der Mottenaugenstruktur kann es auch zu einer Veränderung des Farbeindrucks der Dünnschichtanordnung kommen.

Die erfindungsgemäße Mottenaugenstruktur weist vorzugsweise periodische Strukturen auf, damit der gewünschte Farbkippeffekt erzeugt werden kann. Es ist jedoch auch nicht ausgeschlossen, dass aperiodische Mottenaugenstrukturen herangezogen werden, sollte dies für einen bestimmten zu erreichenden Effekt erforderlich oder vorteilhafter sein.

Selbstverständlich ist es auch möglich durch Variation der Strukturparameter der Mottenaugenstruktur, wie z.B. der Strukturperiode, in einer einzigen Mottenaugenstruktur unterschiedliche Beugungsfarben zu erzeugen. Beispielsweise kann ein besonderes Sicherheitselement hergestellt werden, indem die Mottenaugenstruktur einen ersten Bereich mit einer bestimmten ersten Periodizität (Strukturperiode) der Mottenaugen und neben diesem ersten Bereich einen zweiten Bereich mit einer von dieser ersten Periodizität verschiedenen zweiten Periodizität (Strukturperiode) umfasst. Die Mottenaugenstruktur umfassend die beiden unterschiedlichen Bereiche erscheint dann in einem steilen Betrachtungswinkel in ihrer Gesamtheit dennoch dunkel bis schwarz, das Sicherheitselement erscheint also in der Farbe der Schicht zur Erzeugung eines ersten Farbkippeffekts, während die Mottenaugenstruktur in einem flachen Betrachtungswinkel zwei oder mehr unterschiedliche Beugungsfarben aufweist, entsprechend den beiden oder mehreren Bereichen mit unterschiedlicher Periodizität. Dadurch kann das Sicherheitselement noch fälschungssicherer ausgestaltet werden. Dieser Effekt tritt insbesondere auch ein, wenn erster und zweiter Bereich der Mottenaugenstruktur von der gleichen Dünnschichtanordnung und der gleichen reflektierenden Schicht bedeckt sind.

Als Schicht zur Erzeugung eines ersten Farbkippeffekts wird eine Dünnschichtanordnung verwendet. Farbkippeffekt bedeutet generell, dass sich der Farbeindruck der Schicht je nach Betrachtungswinkel ändert. Dies bedeutet, dass die Schicht im gegenständlichen Fall im steilen Betrachtungswinkel, also etwa in einem Winkel von 75°-90° zur Fläche des Sicherheitselements, einen anderen Farbeindruck hervorruft als im flachen Betrachtungswinkel, also etwa einem Winkel von weniger als 75°, insbesondere weniger als 45°. Der Betrachtungswinkel beträgt 90°, wenn das Sicherheitselement normal zu seiner Ebene betrachtet wird, und 0°, wenn man parallel zur Ebene des Sicherheitselements blicken würde.

Durch die Verwendung einer Dünnschichtanordnung können Farbkippeffekte mit bereits bekannten Farbpaaren erreicht werden. Bekannt ist in diesem Zusammenhang etwa ein Farbkippeffekt von Grün im steilen Winkel und Blau im flachen Winkel, oder Grün im steilen Winkel und Magenta im flachen Winkel oder Magenta im steilen Winkel und Grün im flachen Winkel. Nicht erzeugt werden kann jedoch ein Farbkippeffekt von Blau im steilen Betrachtungswinkel auf Grün im flachen Betrachtungswinkel oder von Magenta im steilen Betrachtungswinkel auf Blau im flachen Betrachtungswinkel. Dieser Nachteil soll mit der gegenständlichen Erfindung überwunden werden.

Erfindungsgemäß ist vorgesehen, dass die Schicht zur Erzeugung eines ersten Farbkippeffekts zumindest abschnittsweise überlappend mit der Mottenaugenstruktur (und der darauf angeordneten reflektierenden Schicht) angeordnet ist. Die Schicht zur Erzeugung eines ersten Farbkippeffekts kann daher sowohl vollständig als auch nur mit bestimmten Abschnitten auf der, auf der Mottenaugenstruktur angeordneten reflektierenden Schicht angeordnet sein. Vorzugsweise ist die auf der Mottenaugenstruktur angeordnete reflektierende Schicht jedoch vollständig kongruent mit der Schicht zur Erzeugung eines ersten Farbkippeffekts. Im überlappenden Bereich tritt der erfindungsgemäße Effekt auf.

In der Regel ist die dielektrische Schicht der Dünnschichtanordnung direkt auf der reflektierenden Schicht angeordnet (wobei die reflektierende Schicht selbst direkt auf der Mottenaugenstruktur angeordnet ist) und die Absorberschicht der Dünnschichtanordnung direkt auf der dielektrischen Schicht angeordnet. Die Dünnschichtanordnung folgt der Mikrostruktur der Mottenaugenstruktur, ebnet also die Mottenaugenstruktur nicht ein.

Es wäre aber auch denkbar, dass die Absorberschicht der Dünnschichtanordnung direkt auf der Mottenaugenstruktur angeordnet ist, auf der Absorberschicht die dielektrische Schicht und darauf optional eine Reflexionsschicht für die Dünnschichtanordnung.

Durch die zumindest abschnittsweise überlappende Anordnung der Dünnschichtanordnung auf der erfindungsgemäßen Mottenaugenstruktur wird erreicht, dass zwei Farbkippeffekte erzeugt werden können. Im steilen Betrachtungswinkel erscheint die Mottenaugenstruktur einem Betrachter dunkel bis fast schwarz, während die Dünnschichtanordnung beispielsweise magentafarben wirkt, da entsprechende, die Farbe Magenta erzeugende Wellenlängen reflektiert werden. Insgesamt ergibt sich durch die Anordnung der Dünnschichtanordnung auf der, mit der reflektierenden Schicht versehenen Mottenaugenstruktur bei steilem Betrachtungswinkel ein magentafarbener Farbeindruck, der im Vergleich zur Dünnschichtanordnung allein schwächer und/oder weniger glänzend erscheint. Wenn der Betrachter das optische Sicherheitselement jedoch in einen flachen Betrachtungswinkel kippt, erzeugt die Mottenaugenstruktur auf Grund der vorhandenen diffraktiven optischen Struktur der Mottenaugenstruktur einen Farbeindruck in Form einer Beugungsfarbe, z.B. Blau. Auf diese Weise wird ein Farbkippeffekt von Magenta auf Blau erreicht, der weder durch eine Mottenaugenstruktur alleine noch durch eine Dünnschichtanordnung alleine erzielt werden kann. Die Dünnschichtanordnung selbst zeigt bei sehr flachem Betrachtungswinkel keinen oder nur eine geringen Farbeffekt, sodass der Farbeffekt der Mottenaugenstruktur dominiert.

Denkbar ist auch, dass die Dünnschichtanordnung und die Mottenaugenstruktur so ausgewählt sind, dass die Dünnschichtanordnung in einem mittleren Betrachtungswinkel, der zwischen einem steilen Betrachtungswinkel und einem flachen Betrachtungswinkel liegt, eine zweite Farbe zeigt, z.B. Grün, während die Mottenaugenstruktur bei diesem Betrachtungswinkel noch keinen Farbeindruck zeigt, weshalb die zweite Farbe der Dünnschichtanordnung zu sehen ist. Damit sind in Abhängigkeit vom Betrachtungswinkel insgesamt schon drei Farben sichtbar, die mit einer Dünnschichtanordnung allein oder mit einer Mottenaugenstruktur allein nicht erzielt werden können.

In einer bevorzugten Ausführungsform der Erfindung ist vorgesehen, dass das Sicherheitselement weiters einen flächigen Träger umfasst. Die Mottenaugenstruktur und die Dünnschichtanordnung sind in der Regel flächige Schichten, sie bilden ein flächiges Sicherheitselement. Sie werden aus Gründen der Stabilität in der Regel auf einem flächigen Träger angeordnet. Die Schichten des Sicherheitselements, nämlich die Mottenaugenstruktur und die Dünnschichtanordnung, sind bei Vorhandensein eines Trägers auf der gleichen Seite des Trägers angeordnet. Dabei ist beispielsweise die nicht strukturierte Seite der Mottenaugenstruktur mit dem Träger verbunden, z.B. indem die Mottenaugenstruktur in die Oberfläche des Trägers oder in eine Lackschicht eingeprägt ist, die sich auf dem Träger befindet.

Ein erfindungsgemäßer Träger kann jeder Träger sein, der dazu geeignet ist, dass eine Mottenaugenstruktur auf ihm aufgebracht wird. Vorzugsweise handelt es sich hierbei um einen Träger aus Kunststoff, beispielsweise PET (Polyethylenterephthalat). Selbstverständlich wird die Verwendung anderer geeigneter Materialien nicht ausgeschlossen. Als Träger kommen beispielsweise transparente Trägerfolien, vorzugsweise flexible Kunststofffolien, beispielsweise aus Polyimid (PI), Polypropylen (PP), monoaxial orientiertem Polypropylen (MOPP), biaxial orientierten Polypropylen (BOPP), Polyethylen (PE), Polyphenylensulfid (PPS), Polyetheretherketon (PEEK), Polyetherketon (PEK), Polyethylenimid (PEI), Polysulfon (PSU), Polyaryletherketon (PAEK), Polyethylennaphthalat (PEN), flüssigkristalline Polymere (LCP), Polyester, Polybutylenterephthalat (PBT) , Polyethylenterephthalat (PET), Polyamid (PA), Polycarbonat (PC), Cycloolefincopolymere (COC), Polyoximethylen (POM), Acrylnitril-butadien-styrol (ABS), Polyvinylchlorid (PVC) Ethylentetrafluorethylen (ETFE), Polytetrafluorethylen (PTFE), Polyvinylfluorid (PVF), Polyvinylidenfluorid (PVDF) und Ethylen-Tetrafluorethylen-Hexafluorpropylen-Fluorterpolymer (EFEP) und/oder Mischungen und/oder Co-Polymere dieser Materialien in Frage. Die Träger bzw. Trägerfolien können transparent, transluzent, semiopak oder opak sein.

Der Träger kann insbesondere eine Folie sein, andere Träger sind jedoch von der Verwendung nicht ausgeschlossen.

Vorzugsweise ist vorgesehen, dass das Sicherheitselement durch Schutzschichten auf einer oder auf beiden Seiten geschützt wird, z.B. mittels Schutzlackschichten oder zusätzlicher Folien. So kann etwa eine auf der Oberfläche des Sicherheitselements liegende Mottenaugenstruktur oder eine Schicht zur Erzeugung eines Farbkippeffekts mit einer Schutzschicht versehen sein. Und/oder es kann etwa auf dem Träger eine Schutzschicht angeordnet sein, um den Träger zu schützen.

Eine Dünnschichtanordnung besteht in der Regel aus zumindest zwei Teilschichten: einer dielektrischen Schicht und einer Absorberschicht. Eine zusätzliche optionale Reflexionsschicht auf der anderen Seite der dielektrischen Schicht, also der Absorberschicht bezüglich der dielektrischen Schicht gegenüberliegend, reflektiert elektromagnetische Wellen, etwa Licht im sichtbaren Bereich, und verstärkt somit den Interferenzeffekt. Bei der erfindungsgemäßen Dünnschichtanordnung bildet die reflektierende Schicht, die direkt auf der Mottenaugenstruktur angeordnet ist, diese Reflexionsschicht. Die dielektrische Schicht dient als Abstandsschicht, gegebenenfalls zwischen Reflexionsschicht und Absorberschicht. Der Farbkippeffekt tritt bei Betrachtung der Interferenzbeschichtung von der Seite der Absorberschicht auf, wenn also Licht durch die Absorberschicht auf die dielektrische Schicht fällt. Das erfindungsgemäße Sicherheitselement ist dafür gedacht im Auflicht von der Absorberseite her betrachtet zu werden.

Für die dielektrische Schicht der Dünnschichtanordnung kommen dielektrische Materialien mit einem Brechungsindex kleiner oder gleich 1,65 in Frage, z.B. Aluminiumoxid (Al₂O₃), Metallfluoride, beispielsweise Magnesiumfluorid (MgF₂), Aluminiumfluorid (AlF₃), Siliziumoxid (SiOₓ), Siliziumdioxid (SiO₂),Cerfluorid (CeF₃), Natrium-Aluminium-Fluoride (z.B. Na₃AlF₆ oder Na₅Al₃F₁₄), Neodymfluorid (NdF₃), Lanthanfluorid (LaF₃), Samariumfluorid (SmF₃), Bariumfluorid (BaF₂), Calciumfluorid (CaF₂), Lithiumfluorid (LiF), niedrigbrechende organische Monomere und/oder niedrigbrechende organische Polymere.

Für die dielektrische Schicht der Dünnschichtanordnung kommen aber auch dielektrische Materialien mit einem Brechungsindex größer 1,65 in Frage, z.B. Zinksulfid (ZnS), Zinkoxid (ZnO), Titandioxid (TiO₂), Kohlenstoff (C), Indiumoxid (In₂O₃), Indium-Zinn-Oxid (ITO), Tantalpentoxid (Ta₂O₅), Ceroxid (CeO₂), Yttriumoxid (Y₂O₃), Europiumoxid (Eu₂O₃), Eisenoxide wie zum Beispiel Eisen (II,III) oxid (Fe₃O₄) und Eisen (III) oxid (Fe₂O₃), Hafniumnitrid (HfN), Hafniumcarbid (HfC), Hafniumoxid (HfO₂), Lanthanoxid (La₂O₃), Magnesiumoxid (MgO), Neodymoxid (Nd₂O₃), Praseodymoxid (Pr₆O₁₁), Samariumoxid (Sm₂O₃), Antimontrioxid (Sb₂O₃), Siliziumcarbid (SiC), Siliziumnitrid (Si₃N₄), Siliziummonoxid (SiO), Selentrioxid (Se₂O₃), Zinnoxid (SnO₂), Wolframtrioxid (WO₃), hochbrechende organische Monomere und/oder hochbrechende organische Polymere.

Als Absorberschicht der Dünnschichtanordnung kann eine metallische Schicht eingesetzt werden, wobei es sich beispielsweise um eine reine Metallschicht handeln kann oder um eine metallische Cluster enthaltende Schicht. Vorzugsweise umfasst die Absorberschicht zumindest ein Metall der Gruppe bestehend aus Aluminium, Gold, Titan, Vanadium, Kobalt, Wolfram, Niob, Eisen, Molybdän, Palladium, Platin, Chrom, Silber, Kupfer, Nickel, Tantal, Zinn und/oder deren Legierungen, beispielsweise Gold/Palladium, Kupfer/Nickel, Kupfer/Aluminium oder Chrom/Nickel. Die Absorberschicht kann insbesondere eine semitransparente metallische Schicht sein, wie dies im Folgenden für die reflektierende Schicht beschrieben wird.

Als reflektierende Schicht, die zusätzlich als Reflexionsschicht der Dünnschichtanordnung dient, kann eine metallische Schicht eingesetzt werden, welche vorzugsweise zumindest ein Metall ausgewählt aus der Gruppe bestehend aus Aluminium, Gold, Chrom, Silber, Kupfer, Zinn, Platin, Nickel und deren Legierungen, beispielsweise Nickel/Chrom oder Kupfer/Aluminium. Ebenfalls ist es denkbar, dass die reflektierende Schicht einen Halbleiter, wie etwa Silicium, enthält. Schließlich ist es auch denkbar, dass die reflektierende Schicht durch Auftragen einer Druckfarbe mit metallischen Pigmenten, vorzugweise aus einem Metall aus der zuvor erwähnten Gruppe, hergestellt wird. Die reflektierende Schicht wird vollflächig oder partiell durch bekannte Verfahren, wie Sprühen, Bedampfen, Sputtern, oder beispielsweise als Druckfarbe durch bekannte Druckverfahren (Tief-, Flexo-, Sieb-, Digitaldruck), durch Lackieren, Walzenauftragsverfahren, Schlitzdüsen-, Tauch-(rolldip coating) oder Vorhangauftragsverfahren (curtain coating) und dergleichen aufgebracht.

Es ist denkbar, dass die metallische Schicht auf der Mottenaugenstruktur in unterschiedlichen Flächenbereichen unterschiedliche Eigenschaften aufweist, z.B. in unterschiedlichen Flächenbereichen unterschiedliche Metalle als Hauptbestandteil aufweist, und/oder unterschiedlich transparent ist, und/oder unterschiedliche mittlere (über mehrere Strukturperioden gemittelte) Dicken aufweist.

Die metallische Schicht kann so beschaffen sein, dass diese nicht oder kaum transparent ist, der Transmissionsgrad also etwa kleiner 20%, insbesondere kleiner 10% für sichtbares Licht ist. In diesem Fall kann das erfindungsgemäße Sicherheitselement sinnvoller Weise nur im Auflicht betrachtet werden, weil die metallische Schicht kein oder kaum Licht aus Richtung der Mottenaugenstruktur in die Dünnschichtanordnung durchlässt.

In einer Ausführungsform der Erfindung ist vorgesehen, dass die reflektierende Schicht eine semitransparente metallische Schicht mit einem Transmissionsgrad zwischen 20 und 80% für sichtbares Licht umfasst. In diesem Fall kann das erfindungsgemäße Sicherheitselement auch im Durchlicht einen Farbeindruck zeigen, wenn also der Betrachter von der Seite der Absorberschicht auf das Sicherheitselement blickt und das Licht sieht, dass durch das Sicherheitselement dringt, also zuerst die Mottenaugenstruktur und dann die Dünnschichtanordnung durchläuft. Der Farbeindruck, der sich im Durchlicht einstellt, kann als zusätzliches Sicherheitsmerkmal dienen, weil er in Kombination mit den Farbkippeffekten im Auflicht nicht anders hervorgerufen werden kann.

Die semitransparente metallische Schicht kann vorzugsweise hauptsächlich aus einem Metall bestehen, etwa Chrom oder Aluminium, insbesondere eine semitransparente Aluminiumschicht sein. Die semitransparente metallische Schicht kann aber auch zwei oder mehr verschiedene Metalle umfassen.

Denkbar wäre auch eine semitransparente metallische Schicht, die im Auflicht schwarz erscheint.

Sicherheitselemente mit einer semitransparenten Metallschicht als reflektierende Schicht sind aufgrund ihrer Transparenz gut für Anwendungen in einem transparenten Fenster eines Datenträgers oder Wertdokuments geeignet.

Als reflektierende Schicht können auch sogenannte HRI-Schichten (High Refractive Index Schichten) verwendet werden, die ein Material mit einem Brechungsindex größer 1,5 umfassen. Solche HRI-Schichten weisen beispielsweise dielektrische Materialien mit einem Brechungsindex von größer oder gleich 1,65 auf, z.B Zinksulfid (ZnS), Zinkoxid (ZnO), Titandioxid (TiO₂), Kohlenstoff (C), Indiumoxid (In₂O₃), Indium-Zinn-Oxid (ITO), Tantalpentoxid (Ta₂O₅), Ceroxid (CeO₂), Yttriumoxid (Y₂O₃), Europiumoxid (Eu₂O₃), Eisenoxide wie zum Beispiel Eisen (II,III) oxid (Fe₃O₄) und Eisen (III) oxid (Fe₂O₃), Hafniumnitrid (HfN), Hafniumcarbid (HfC), Hafniumoxid (HfO₂), Lanthanoxid (La₂O₃), Magnesiumoxid (MgO), Neodymoxid (Nd₂O₃), Praseodymoxid (Pr₆O₁₁), Samariumoxid (Sm₂O₃), Antimontrioxid (Sb₂O₃), Siliziumcarbid (SiC), Siliziumnitrid (Si₃N₄), Siliziummonoxid (SiO), Selentrioxid (Se₂O₃), Zinnoxid (SnO₂), Wolframtrioxid (WO₃), hochbrechende organische Monomere und/oder hochbrechende organische Polymere. Diese Materialien können entweder aufgedampft oder aufgedruckt (vor allem die Monomere und Polymere) werden.

HRI-Schichten sind an sich transparent, sodass auch in diesem Fall das erfindungsgemäße Sicherheitselement im Durchlicht einen Farbeindruck zeigen kann, wenn also der Betrachter von der Seite der Absorberschicht auf das Sicherheitselement blickt und das Licht sieht, dass durch das Sicherheitselement dringt, also zuerst die Mottenaugenstruktur und dann die Dünnschichtanordnung durchläuft. Sicherheitselemente mit einer HRI-Schicht als reflektierende Schicht sind aufgrund ihrer Transparenz gut für Anwendungen in einem transparenten Fenster eines Datenträgers oder Wertdokuments geeignet.

Ein Fenster eines Datenträgers oder Wertdokuments wird gebildet, indem zumindest eine Lage des Datenträgers oder Wertdokuments in einem Flächenbereich dünner ausgeführt ist, sodass die Lage in diesem Flächenbereich für sichtbares Licht transparent ist und dieser Flächenbereich das Fenster bildet; oder indem zumindest eine Lage eine durchgehende Aussparung aufweist, welche Aussparung dann kein Material dieser Lage enthält und die Aussparung das Fenster bildet; oder indem zumindest eine Lage an sich zumindest in einem Flächenbereich transparent ausgeführt ist und dieser Flächenbereich das Fenster bildet.

Die metallische Schicht bzw. die HRI-Schicht ist direkt auf den Mikrostrukturen der Mottenaugenstruktur aufgebracht.

Die metallische Schicht bzw. die HRI-Schicht dient der Verstärkung der durch die Mottenaugenstruktur erzeugten Beugung. Die metallische Schicht bzw. die HRI-Schicht ist so dünn, dass die Mottenaugenstruktur dadurch nicht oder kaum verändert wird, also die Höhe und Breite der Mikrostrukturen nicht oder kaum verändert wird. Die metallische Schicht wird so aufgebracht, dass ihre optische Dichte größer 1, insbesondere größer 1,5 ist. Die metallische Schicht bzw. die HRI-Schicht erfüllen den ganz allgemeinen Zweck einen Brechungsindexunterschied zwischen den Schichten zu erzeugen, um überhaupt eine Reflexion erzeugen zu können. Dies ist insbesondere erforderlich, da in der Regel mehrere Schichten zur Herstellung eines Sicherheitselements verwendet werden und sonst kein ausreichend großer Brechungsindexunterschied vorliegen würde.

Selbstverständlich ist nicht ausgeschlossen, dass statt der metallischen oder der HRI-Schicht eine andere Schicht verwendet wird, sofern sie zur erfindungsgemäßen Anwendung geeignet ist.

In einer Ausführungsform der Erfindung ist vorgesehen, dass - in der Ebene des Sicherheitselements gesehen - neben der Mottenaugenstruktur zumindest ein Abschnitt ohne Mottenaugenstruktur vorgesehen ist und dass dieser zumindest abschnittsweise die gleiche reflektierende Schicht und die gleiche Dünnschichtanordnung wie die Mottenaugenstruktur aufweist, wobei sich die reflektierende Schicht und die Dünnschichtanordnung im Abschnitt ohne Mottenaugenstruktur zumindest abschnittsweise überlappen.

Das heißt, im Abschnitt ohne Mottenaugenstruktur gibt es zumindest einen Bereich, wo die reflektierende Schicht und die Dünnschichtanordnung übereinander liegen und somit in diesem Bereich ein gut sichtbarer Farbkippeffekt auftritt. Die reflektierende Schicht im Abschnitt ohne Mottenaugenstruktur kann direkt an die reflektierende Schicht auf der Mottenaugenstruktur anschließen oder - in der Ebene des Sicherheitselements gesehen - einen Abstand zu dieser aufweisen. Alternativ oder zusätzlich kann die Dünnschichtanordnung im Abschnitt ohne Mottenaugenstruktur direkt an die Dünnschichtanordnung im Abschnitt mit Mottenaugenstruktur anschließen oder - in der Ebene des Sicherheitselements gesehen - einen Abstand zu dieser aufweisen.

Insbesondere kann somit vorgesehen sein, dass sich sowohl die reflektierende Schicht als auch die Dünnschichtanordnung, welche einander zumindest teilweise überlappen, von der Mottenaugenstruktur in den Abschnitt ohne Mottenaugenstruktur fortsetzen und mit diesem überlappen.

Der Abschnitt ohne Mottenaugenstruktur wird insbesondere eben ausgebildet sein. Wenn der Abschnitt ohne Mottenaugenstruktur transparent ausgeführt ist, können auch Farbeindrücke im Durchlicht auftreten. Ein etwaiger Träger müsste dann ebenfalls transparent sein.

Der mit einer reflektierenden Schicht und einer Dünnschichtanordnung versehene Abschnitt ohne Mottenaugenstruktur hinterlässt einen anderen optischen Eindruck als der Abschnitt mit der Mottenaugenstruktur, was als weiteres Sicherheitsmerkmal dient. Gleichzeitig bleibt die Herstellung des Sicherheitselements einfach, denn es kann auf eine Schicht, die abschnittsweise eine Mottenaugenstruktur und abschnittsweise keine Mottenaugenstruktur aufweist, einfach die gleiche reflektierende Schicht und die gleiche Dünnschichtanordnung aufgebracht werden.

Durch die fehlende Mottenaugenstruktur wird auf jeden Fall im Auflicht in einem flachen Betrachtungswinkel entweder nur eine von der Dünnschichtanordnung hervorgebrachte Farbe zu sehen sein oder gar keine Farbe, weil der diffraktive Anteil der Mottenaugenstruktur jedenfalls wegfällt. Im steilen Betrachtungswinkel wird die von der Dünnschichtanordnung hervorgebrachte Farbe in der Regel heller oder kräftiger wirken als im Abschnitt mit Mottenaugenstruktur.

Durch die periodischen Erhebungen und Senken der Mottenaugenstruktur wird sich bei gleichem Materialauftrag für die reflektierende Schicht, für die Abstandsschicht und für die Absorberschicht jedoch eine andere optisch wirksame Schichtdicke ergeben als im Abschnitt ohne Mottenaugenstruktur. Insofern können die Farben der Dünnschichtanordnung bei gleicher Menge an pro Flächeneinheit aufgetragenem Material dennoch unterschiedlich sein zwischen dem Abschnitt mit Mottenaugenstruktur und dem Abschnitt ohne Mottenaugenstruktur.

Je nach Ausführung der reflektierenden Schicht ist der Abschnitt ohne Mottenaugenstruktur im Durchlicht, egal von welcher Seite, transparent oder nicht.

Im Fall einer für sichtbares Licht kaum oder nicht transparenten metallischen Schicht wäre im Durchlicht gar keine Farbe oder farbige Tönung zu erkennen, weder bei Blickrichtung auf die Absorberschicht, noch bei Blickrichtung auf die nicht strukturierte Seite der Mottenaugenstruktur, weil eben kaum oder kein sichtbares Licht durch die metallische Schicht dringen kann.

Im Fall einer für sichtbares Licht transparenten metallischen Schicht, mit einem Transmissionsgrad zwischen 20 und 80%, wäre im Abschnitt ohne Mottenaugenstruktur im Durchlicht, von der Seite der Absorberschicht gesehen, eine Farbe oder eine farbige Tönung zu erkennen. Von der anderen Seite gesehen würde sich im Durchlicht in der Regel eine andere Farbe oder eine andere farbige Tönung ergeben, weil Absorberschicht und reflektierende Schicht in der Regel unterschiedliche Eigenschaften aufweisen. Im Auflicht bei Blickrichtung auf die nicht strukturierte Seite der Mottenaugenstruktur wäre im Bereich der Mottenaugenstruktur eine schwache Farbe durch Reflexion an der metallischen Schicht erkennbar, im Abschnitt ohne Mottenaugenstruktur wäre ein Farbkippeffekt sichtbar. Dieser Farbkippeffekt würde sich in der Regel vom Farbkippeffekt bei Blickrichtung auf die Absorberschicht unterscheiden, außer wenn die reflektierende Schicht gleich beschaffen wäre wie die Absorberschicht, also etwa gleiche Dicke und gleiches Material aufweisen.

In einer Ausführungsform der Erfindung ist vorgesehen, dass - in der Ebene des Sicherheitselements gesehen - neben der Mottenaugenstruktur zumindest ein Abschnitt ohne Mottenaugenstruktur vorgesehen ist und dass dieser zumindest abschnittsweise die gleiche Dünnschichtanordnung wie die Mottenaugenstruktur aufweist, während eine weitere reflektierende Schicht, mit anderen optischen Eigenschaften als die reflektierende Schicht auf der Mottenaugenstruktur, im Abschnitt ohne Mottenaugenstruktur als Reflexionsschicht für die Dünnschichtanordnung vorgesehen ist. Die unterschiedlichen reflektierenden Schichten können aus einem unterschiedlichen Material aufgebaut sein, um andere optische Eigenschaften zu erzielen.

Mit anderen Worten kann ein weiterer Farbeffekt erzielt werden, wenn eine reflektierende Schicht - als Reflexionsschicht für die Dünnschichtanordnung - zwar auch im Abschnitt ohne Mottenaugen vorhanden ist, aber eben andere optische Eigenschaften aufweist als die reflektierende Schicht. Insbesondere kann diese weitere reflektierende Schicht eine metallische Schicht sein, z.B. hauptsächlich bestehend aus einem anderen Metall als die reflektierende Schicht auf der Mottenaugenstruktur.

Es wäre also in einer Ausführungsform sowohl die reflektierende Schicht auf der Mottenaugenstruktur als auch die weitere reflektierende Schicht auf dem Abschnitt ohne Mottenaugenstruktur eine metallische Schicht. Es ist auch denkbar, dass die reflektierende Schicht auf der Mottenaugenstruktur eine HRI-Schicht ist und die weitere reflektierende Schicht ebenfalls eine HRI-Schicht; oder dass die reflektierende Schicht auf der Mottenaugenstruktur eine metallische Schicht ist und die weitere reflektierende Schicht eine HRI-Schicht; oder dass die reflektierende Schicht auf der Mottenaugenstruktur eine HRI-Schicht ist und die weitere reflektierende Schicht eine metallische Schicht.

In einer Ausführungsform der Erfindung ist vorgesehen, dass die weitere reflektierende Schicht einen Abstand zur reflektierenden Schicht auf der Mottenaugenstruktur aufweist. Durch diesen Abstand zwischen den beiden unterschiedlichen reflektierenden Schichten ergibt sich ein weiterer optischer Effekt in diesem Bereich ohne reflektierende Schicht. Die weitere reflektierende Schicht könnte aber auch ohne Abstand an die reflektierende Schicht auf der Mottenaugenstruktur anschließen.

Unabhängig davon, ob die weitere reflektierende Schicht einen Abstand zur reflektierenden Schicht auf der Mottenaugenstruktur aufweist oder nicht, kann vorgesehen sein, dass die Dünnschichtanordnung im Abschnitt ohne Mottenaugenstruktur einen Abstand zur Dünnschichtanordnung auf der Mottenaugenstruktur aufweist. Durch diesen Abstand zwischen den beiden Dünnschichtanordnungen ergibt sich ein weiterer optischer Effekt in diesem Bereich ohne Dünnschichtanordnung. Die Dünnschichtanordnung im Abschnitt ohne Mottenaugenstruktur könnte aber auch ohne Abstand an die Dünnschichtanordnung auf der Mottenaugenstruktur anschließen.

Zusätzlich oder alternativ dazu, dass die weitere reflektierende Schicht andere optische Eigenschaften aufweist als die reflektrierende Schicht auf den Mottenaugen, kann vorgesehen sein, dass die weitere reflektierende Schicht eine andere Dicke aufweist als die reflektierende Schicht auf der Mottenaugenstruktur. Dies gilt sowohl für den Fall, wo die unterschiedlichen reflektierenden Schichten unmittelbar aneinander anschließen, als auch für den Fall, wo ein Abstand zwischen den unterschiedlichen reflektierenden Schichten vorgesehen ist.

In einer Ausführungsform der Erfindung ist vorgesehen, dass das Sicherheitselement so ausgebildet ist, dass in einem ersten Betrachtungswinkel des Sicherheitselements die Mottenaugenstruktur einfallende Strahlung großteils absorbiert und dass die Mottenaugenstruktur in einem zweiten Betrachtungswinkel des Sicherheitselements einfallende Strahlung großteils beugt, um einen zweiten Farbkippeffekt zu erzeugen.

Bei der im Zusammenhang mit der gegenständlichen Erfindung verwendeten Mottenaugenstruktur handelt es sich um eine spezielle Mottenaugenstruktur, die einerseits als Absorber und andererseits als diffraktive Struktur dienen kann. Eine entsprechende Mottenaugenstruktur, die in einem bestimmten Betrachtungswinkel als diffraktive Struktur wirkt, wird etwa vom Unternehmen Toppan unter dem Namen Asterium^{®} vertrieben.

Die mit der reflektierenden Schicht versehene Mottenaugenstruktur alleine (ohne Dünnschichtanordnung) wirkt in einem ersten steilen Betrachtungswinkel, dies bedeutet einen Betrachtungswinkel größer als 75°, als Absorber und absorbiert die Wellenlängen des sichtbaren Lichts. Die Mottenaugenstruktur erscheint für einen Betrachter in diesem Winkel daher dunkel bis annähernd schwarz. In einem flachen Betrachtungswinkel, d.h. einem Betrachtungswinkel von kleiner 75°, bevorzugt kleiner als 45°, wirkt die Mottenaugenstruktur aber als diffraktives Element, sodass einfallende Strahlung in einem bestimmten Wellenlängenbereich, z.B. dem blauen Wellenlängenbereich, gebeugt wird. Dadurch kann erreicht werden, dass die Mottenaugenstruktur für den Betrachter im flachen Betrachtungswinkel wiederum farbig erscheint und nicht mehr dunkel oder annähernd schwarz.

Die auf der Mottenaugenstruktur angeordnete Dünnschichtanordnung an sich erscheint einem Betrachter im steilen Winkel farbig, beispielsweise Magenta. Durch den Umstand, dass die Dünnschichtanordnung zumindest abschnittsweise auf der Mottenaugenstruktur angeordnet ist, erfährt der Betrachter im steilen Winkel einen magentafarbigen Farbeindruck, der allenfalls durch die darunter liegende Mottenaugenstruktur abgeschwächt wird.

In einem zweiten, flachen, Betrachtungswinkel wiederum wirkt die Mottenaugenstruktur nicht mehr als Absorber, sondern beugt ihrerseits die einfallende Strahlung, so dass ein zweiter Farbkippeffekt erzeugt wird. Je nach gebeugter Wellenlänge des Lichts wird ein anderer Farbeffekt erzeugt. Die Schicht zur Erzeugung eines ersten Farbkippeffekts, die zumindest abschnittsweise auf der Mottenaugenstruktur angeordnet ist, also die Dünnschichtanordnung, erscheint auf Grund des ersten Farbkippeffekts im zweiten, flachen Betrachtungswinkel beispielsweise grün, wobei der Farbeindruck Grün nicht stark ausgeprägt ist und der von der Mottenaugenstruktur stammende Farbeindruck der Beugungsfarbe, z.B. blau, den Farbeindruck der darüber liegenden Dünnschichtanordnung überlagert.

Da die Dünnschichtanordnung aber nur abschnittsweise auf bzw. überlappend mit der Mottenaugenstruktur angeordnet werden muss, bedeutet dies, dass der doppelte Farbkippeffekt nur in den Bereichen auftreten kann, in denen die Dünnschichtanordnung auf bzw. überlappend mit der Mottenaugenstruktur angeordnet ist. In diesem Fall sieht der Betrachter daher z.B. einen Farbkippeffekt von Magenta auf Blau, während in Abschnitten, in denen nur die Mottenaugenstruktur angeordnet ist, der Betrachter einen Farbeindruck von Schwarz auf Blau erfährt. Ein solcher Farbeffekt von Schwarz auf Blau ist insbesondere deshalb vorteilhaft, da der blaue Farbeindruck der Mottenaugenstruktur den schwach ausgeprägten Farbeindruck der darüber liegenden Dünnschichtanordnung überlagert. Dadurch wird etwa ein Farbkippeffekt zwischen ungewöhnlichen Farbpaaren erreicht, der sonst auf diese Weise nicht erreicht werden kann.

In einer Ausführungsform der Erfindung ist vorgesehen, dass das Sicherheitselement so ausgebildet ist, dass die Dünnschichtanordnung in einem ersten Betrachtungswinkel einen ersten Farbeindruck aufweist und dass die Dünnschichtanordnung in einem zweiten Betrachtungswinkel einen zweiten, vom ersten unterschiedlichen Farbeindruck aufweist, um einen Farbkippeffekt zu erzeugen. Bei flachem Betrachtungswinkel wirkt die reflektierende Schicht der Mottenaugenstruktur nicht als Verstärker des Farbkippeffekts der Dünnschichtanordnung, sodass der Farbeindruck der Dünnschichtanordnung gut von dem durch Beugung erzeugten Farbeindruck der Mottenaugenstruktur überlagert werden kann, wodurch insgesamt ein ungewöhnlicher Farbkippeffekt erzeugt werden kann.

In einer weiteren Ausführungsform der Erfindung ist vorgesehen, dass die Mottenaugenstruktur Mikrostrukturen mit einer Höhe im Bereich von 300 nm bis 700 nm, vorzugweise von 400 nm bis 430 nm, sowie eine Strukturperiode (wird auch als Gitterperiode bezeichnet) von 250 nm bis 500 nm, vorzugsweise von 350 nm bis 450 nm, aufweist.

Mikrostrukturen in dieser Höhe ermöglichen die spezifische Eigenschaft der Mottenaugenstruktur, sodass sie im steilen Winkel schwarz erscheint und als Absorber für die Schicht zur Erzeugung eines ersten Farbkippeffekts wirkt, während sie in einem flachen Winkel Licht beugt, wodurch ein zweiter Farbkippeffekt erzeugt wird.

Es ist vorgesehen, dass das Sicherheitselement insbesondere im Zusammenhang mit Datenträgern oder Wertdokumenten angewendet wird, also das Sicherheitselement Teil eines Wertdokuments oder Datenträgers ist, um die Fälschungssicherheit zu erhöhen. Selbstverständlich ist eine andere Anwendung des Sicherheitselements nicht ausgeschlossen.

Ein erfindungsgemäßes Sicherheitselement kann auf einer oder auf beiden Seiten von Datenträgern, Geldscheinen oder sonstigen Wertdokumenten angeordnet werden. Bei Geldscheinen bzw. sonstigen Wertdokumenten oder Datenträgern handelt es sich normalerweise um flächige Elemente, welche jeweils zwei flächige Seiten aufweisen. Die Geldscheine bzw. sonstigen Wertdokumente können auch abschnittsweise transparent ausgebildet sein, wobei dann ein Sicherheitselement in diesem transparenten Abschnitt angeordnet sein kann und damit nicht nur im Auflicht, sondern auch im Durchlicht betrachtet werden kann.

Selbstverständlich ist nicht ausgeschlossen, dass ein erfindungsgemäßes Sicherheitselement noch weitere Schichten umfasst. Dies können sowohl weitere Schichten, die einen Farbkippeffekt erzeugen, sein oder andere Schichten. Als andere Schichten kommen etwa Schichten umfassend maschinenlesbare Merkmale, wobei es sich bei den maschinenlesbaren Merkmalen insbesondere um Magnetcodierungen, elektrisch leitfähige Schichten, elektromagnetische Wellen absorbierende Schichten und/oder reemittierende Stoffe handelt, zusätzliche Farblackschichten, Schutzlackschichten, Klebeschichten, Primerschichten und/oder Folienschichten in Betracht.

### KURZE BESCHREIBUNG DER FIGUREN

Die Erfindung wird nun anhand von Ausführungsbeispielen näher erläutert. Die Zeichnungen sind schematisch und beispielhaft und sollen den Erfindungsgedanken zwar darlegen, ihn aber keinesfalls einengen oder gar abschließend wiedergeben. Dabei zeigt:
Fig. 1 eine perspektivische Ansicht eines Längsschnitts einer erfindungsgemäßen Mottenaugenstruktur,
Fig. 2 einen Längsschnitt durch ein erfindungsgemäßes Sicherheitselement mit nicht transparenter metallischer Schicht,
Fig. 3 einen Längsschnitt durch ein erfindungsgemäßes Sicherheitselement mit semitransparenter metallischer Schicht,
Fig. 4 einen Längsschnitt durch ein erfindungsgemäßes Sicherheitselement mit HRI-Schicht.

### WEGE ZUR AUSFÜHRUNG DER ERFINDUNG

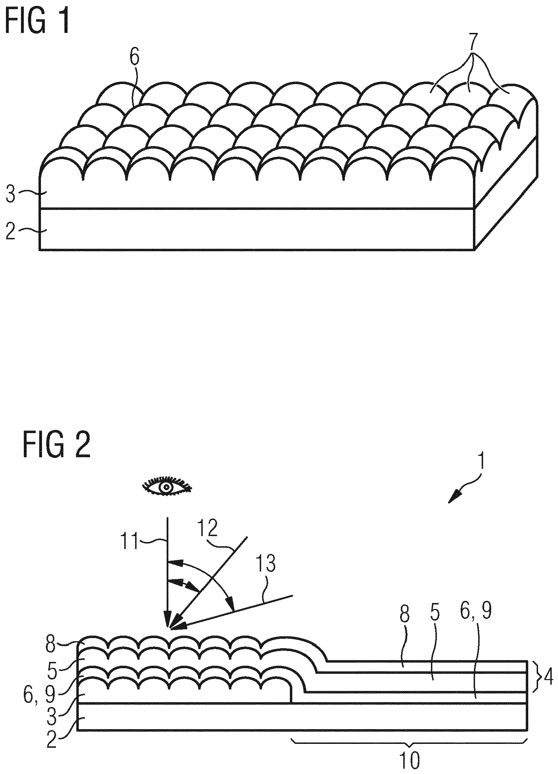

Fig. 1 zeigt den Längsschnitt durch eine erfindungsgemäße Mottenaugenstruktur 3, gefertigt aus beispielsweise Kunststoff oder einem vernetzten bzw. vernetzbarem Lack, welche vom Träger 2 getragen wird. Beim Träger 2 der Fig. 1 handelt es sich hier um eine Kunststofffolie.

Fig. 1 zeigt weiter die konischen Mikrostrukturen 7 der Mottenaugenstruktur 3, welche in periodischen Abständen in Form eines Kreuzgitters auf dem Träger 2 angeordnet sind. Die Strukturperiode (Gitterperiode) ist kleiner bzw. gleich der Wellenlänge des sichtbaren Lichts, um eine Reflexion zu verhindern. Auf den Mikrostrukturen 7 der Mottenaugenstruktur 3 ist eine reflektierende Schicht 6 zur Verstärkung der Beugungswirkung angeordnet.

Fig. 2 zeigt den Längsschnitt durch ein erfindungsgemäßes Sicherheitselement 1 mit einer nicht transparenten metallischen Schicht 9 als reflektierende Schicht 6, wobei das Sicherheitselement 1 einen Träger 2, eine Mottenaugenstruktur 3 sowie eine Dünnschichtanordnung 4 umfasst. Betrachtet wird das Sicherheitselement 1 in Fig. 2 von oben. Die Dünnschichtanordnung 4 umfasst eine dielektrische Schicht (Abstandsschicht) 5, die direkt auf der nicht transparenten metallischen Schicht 9 angeordnet ist, sowie eine Absorberschicht 8, die direkt auf der dielektrischen Schicht 5 angeordnet ist.

In einem ersten, steilen Betrachtungswinkel 11, z.B. senkrecht von oben in Fig. 2, wirkt die Mottenaugenstruktur 3 für einen Betrachter als Absorberschicht und würde daher prinzipiell dunkel bis annähernd schwarz erscheinen. Auf Grund der Dünnschichtanordnung 4 auf der Mottenaugenstruktur 3 erfährt der Betrachter hier z.B. den Farbeindruck Magenta, er sieht die erste Farbe des Farbenpaares der Dünnschichtanordnung 4. Kippt der Betrachter das in Fig. 2 dargestellte Sicherheitselement 1 zu einem zweiten, mittleren Betrachtungswinkel 12, so tritt der Farbkippeffekt der Dünnschichtanordnung 4 ein und die zweite Farbe des Farbenpaares der Dünnschichtanordnung 4 wird sichtbar, z.B. Grün. Die Mottenaugenstruktur 3 wirkt bei diesem zweiten Betrachtungswinkel noch als Absorber. Bei einem dritten, sehr flachen Betrachtungswinkel 13, verändert sich der Farbeindruck entsprechend der Beugungsfarbe der Mottenaugenstruktur 3 weiter, z.B. auf Blau. Dies erfolgt deshalb, da die Mottenaugenstruktur 3 Licht in den blauen Wellenlängenbereich beugt, wodurch der Betrachter einen blauen Farbeindruck erhält. Da der Farbeindruck der zweiten Farbe, der von der Dünnschichtanordnung 4 erzeugt wird, bei diesem sehr flachen Betrachtungswinkel nur schwach ausgeprägt ist, wird er vom Blau der Mottenaugenstruktur 3 überlagert. Für den Betrachter erscheint das Sicherheitselement daher im flachen Winkel blau. Somit ergeben sich je nach Betrachtungswinkel 11, 12, 13 zumindest drei verschiedene Farbeindrücke.

Aufgrund der nicht transparenten metallischen Schicht 9 ergeben sich nur im Auflicht Farbeffekte, wie eben der Farbkippeffekt, oder Farbeindrücke. Im Durchlicht wäre gar keine Farbe oder farbige Tönung zu erkennen, weder bei Blickrichtung auf die Absorberschicht 8 (in Fig. 2 also von oben), noch bei Blickrichtung auf die nicht strukturierte Seite der Mottenaugenstruktur 3 (in Fig. 2 also von unten).

Als mögliche Variante der Erfindung ist hier in der Ebene des Sicherheitselements 1 gesehen neben der Mottenaugenstruktur 3 zumindest ein Abschnitt 10 ohne Mottenaugenstruktur vorgesehen, in den sich sowohl die reflektierende Schicht 6 als auch die Dünnschichtanordnung 4 fortsetzen und mit diesem überlappen. Der Abschnitt 10 ohne Mottenaugenstruktur ist eben ausgebildet und wird hier durch die Oberfläche des Trägers 2 gebildet, der transparent ist. Somit können hier auch bei entsprechender Transparenz der reflektierenden Schicht Farbeindrücke im Durchlicht auftreten.

Dieser Abschnitt 10 ohne Mottenaugenstruktur hinterlässt einen anderen optischen Eindruck als der Abschnitt mit der Mottenaugenstruktur 3, was als weiteres Sicherheitsmerkmal dient. Im ersten, steilen Betrachtungswinkel 11 wird die von der Dünnschichtanordnung 4 hervorgebrachte erste Farbe sichtbar, die in der Regel heller oder kräftiger erscheint als im Abschnitt mit Mottenaugenstruktur 3. Mit abnehmendem Betrachtungswinkel wird die zweite Farbe des Farbenpaares der Dünnschichtanordnung 4 sichtbar, da die diffraktive Farbe der Mottenaugenstruktur 3 fehlt. Bei einem flachen Betrachtungswinkel wird sich daher der Farbeindruck des Abschnitts mit Mottenaugenstruktur 3 jedenfalls von jenem Abschnitt 10 ohne Mottenaugenstruktur unterscheiden.

Durch die periodischen Erhebungen und Senken der Mikrostrukturen 7 der Mottenaugenstruktur 3 wird sich bei gleichem Materialauftrag für die reflektierende Schicht 6, für die Abstandsschicht 5 und für die Absorberschicht 8 jedoch eine andere optisch wirksame Schichtdicke ergeben als im Abschnitt 10 ohne Mottenaugenstruktur, weil die Mikrostrukturen 7 eine größere Oberfläche haben als eine entsprechende ebene Fläche. Insofern können die Farben der Dünnschichtanordnung 4 bei gleicher Menge an pro Flächeneinheit (bezogen auf den Träger 2) aufgetragenem Material und bei gleichem ersten oder zweiten Blickwinkel 11, 12 dennoch leicht unterschiedlich sein. So könnte bei Verringerung der optisch wirksamen Schichtdicke der Abstandsschicht 5 z.B. eine Farbverschiebung von Grün nach Blau erfolgen.

Es ist auch denkbar, dass im Abschnitt 10 ohne Mottenaugenstruktur absichtlich eine weitere reflektierende Schicht mit anderen optischen Eigenschaften als die reflektierende Schicht 6 auf der Mottenaugenstruktur 3 vorgesehen wird, sodass sich jedenfalls ein anderer Farbeindruck ergibt, etwa indem die weitere reflektierende Schicht eine andere Dicke aufweist als die reflektierende Schicht 6 auf der Mottenaugenstruktur 3; und/oder indem für die weitere reflektierende Schicht ein anderes Material verwendet wird, was zu unterschiedlicher Absorption und in der Folge zu unterschiedlicher Reflexion und Transmission führen kann.

Es kann auch vorgesehen sein, dass in der Ebene des Sicherheitselements 1 gesehen die reflektierende Schicht 6 auf der Mottenaugenstruktur 3 nicht direkt an die reflektierende Schicht im Abschnitt 10 ohne Mottenaugenstruktur anschließt, also ein Bereich ohne reflektierende Schicht vorgesehen ist. Im Bereich ohne reflektierende Schicht ergibt sich dann wieder ein anderer Farbeindruck als dort, wo eine reflektierende Schicht vorgesehen ist.

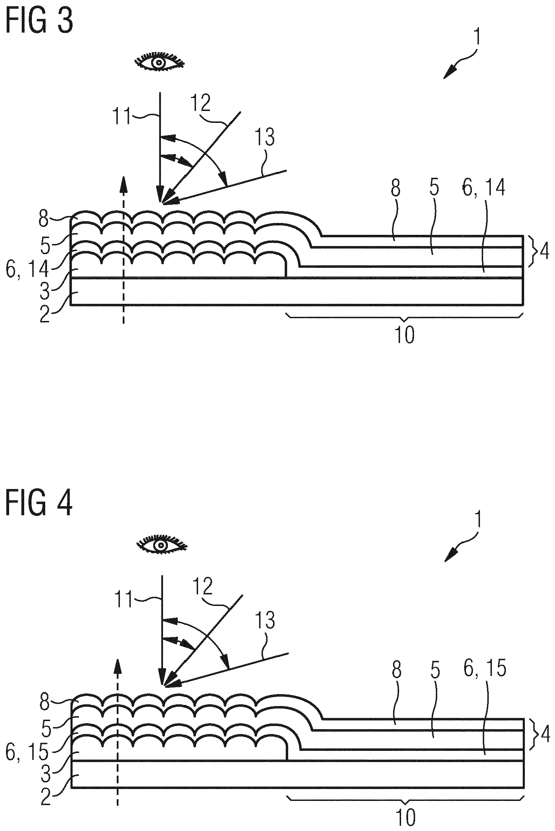

Fig. 3 zeigt einen Längsschnitt durch ein erfindungsgemäßes Sicherheitselement 1 mit einer semitransparenten metallischen Schicht 14 als reflektierende Schicht 6. Der Schichtaufbau des Sicherheitselements 1 ist gleich wie in Fig. 2, auch die Farbeffekte bei den unterschiedlichen Betrachtungswinkeln 11, 12, 13 bleiben gleich.

Da die semitransparente metallische Schicht 14 einen Transmissionsgrad zwischen 20 und 80% bei sichtbarem Licht hat, kann das erfindungsgemäße Sicherheitselement 1 auch im Durchlicht einen Farbeindruck zeigen, wenn also der Betrachter von der Seite der Absorberschicht 8 auf das Sicherheitselement 1 blickt, siehe Augensymbol, und das Licht sieht, dass durch das Sicherheitselement 1 dringt, also zuerst die Mottenaugenstruktur 3 und dann die Dünnschichtanordnung 4 durchläuft, siehe strichlierter Pfeil. Der Farbeindruck, der sich im Durchlicht einstellt, kann als zusätzliches Sicherheitsmerkmal dienen, weil er in Kombination mit den Farbkippeffekten im Auflicht nicht anders hervorgerufen werden kann.

Die semitransparente metallische Schicht 14 kann vorzugsweise hauptsächlich aus einem Metall bestehen, etwa Chrom oder Aluminium, insbesondere eine semitransparente Aluminiumschicht sein.

Im Fall der semitransparenten metallischen Schicht 14 wäre im Abschnitt 10 ohne Mottenaugenstruktur im Durchlicht, von der Seite der Absorberschicht 8 gesehen, eine Farbe oder eine farbige Tönung zu erkennen. Von der anderen Seite gesehen würde sich im Durchlicht in der Regel eine andere Farbe oder eine andere farbige Tönung ergeben, weil Absorberschicht 8 und semitransparente metallische Schicht 14 in der Regel unterschiedliche Eigenschaften aufweisen. Im Auflicht bei Blickrichtung auf die nicht strukturierte Seite der Mottenaugenstruktur 3, also von unten, wäre im Bereich der Mottenaugenstruktur 3 eine schwache Farbe durch Reflexion an der semitransparenten Schicht 14 erkennbar, im Abschnitt 10 ohne Mottenaugenstruktur wäre ein Farbkippeffekt sichtbar. Dieser Farbkippeffekt würde sich in der Regel vom Farbkippeffekt bei Blickrichtung auf die Absorberschicht 8 unterscheiden, außer wenn die reflektierende Schicht 6, also die semitransparente metallische Schicht 14, gleich beschaffen wäre wie die Absorberschicht 8, also etwa gleiche Dicke und gleiches Material aufweisen.

Fig. 4 zeigt einen Längsschnitt durch ein erfindungsgemäßes Sicherheitselement 1 mit einer HRI-Schicht 15 als reflektierende Schicht 6. Der Schichtaufbau des Sicherheitselements 1 ist gleich wie in Fig. 2 und 3, auch die Farbeffekte bei den unterschiedlichen Betrachtuntswinkeln 11, 12, 13 bleiben gleich.

HRI-Schichten 15 sind an sich transparent, sodass auch in diesem Fall das erfindungsgemäße Sicherheitselement 1 im Durchlicht einen Farbeindruck zeigen kann, wenn also der Betrachter von der Seite der Absorberschicht 8 auf das Sicherheitselement 1 blickt und das Licht sieht, dass durch das Sicherheitselement 1 dringt, also zuerst die Mottenaugenstruktur 3 und dann die Dünnschichtanordnung 4 durchläuft, siehe strichlierter Pfeil.

Ein Sicherheitselement gemäß der Fig. 1 bis 4 kann auch derartig ausgebildet sein, dass die Mottenaugenstruktur 3 zumindest zwei Bereiche mit unterschiedlicher Periodizität der Mottenaugen aufweist (in den Figuren nicht gezeigt). Eine derartige Anordnung hätte den Effekt, dass die Mottenaugenstruktur 3 in einem steilen Betrachtungswinkel überall dunkel bis schwarz erscheint (das Sicherheitselement also in der Farbe der Dünnschichtanordnung 4 zur Erzeugung eines ersten Farbkippeffekts erscheint), während jedoch in einem flachen Betrachtungswinkel auf Grund der unterschiedlichen Periodizität der Bereiche in jedem Bereich eine andere Beugungsfarbe erreicht wird.

Die Sicherheitselemente 1 können in allen Ausführungsformen an einer oder an beiden Seiten mit einer Schutzlackschicht versehen werden, um das Sicherheitselement 1 vor äußeren Einflüssen zu schützen. Jene Seite des Sicherheitselements 1, die mit einem Wertdokument verbunden ist oder verbunden werden soll, benötigt in der Regel keine solche Schutzschicht.

### BEZUGSZEICHENLISTE

- 1: Sicherheitselement
- 2: Träger
- 3: Mottenaugenstruktur
- 4: Schicht zur Erzeugung eines ersten Farbkippeffekts (Dünnschichtanordnung)
- 5: dielektrische Schicht (Abstandsschicht)
- 6: reflektierende Schicht
- 7: Mikrostrukturen
- 8: Absorberschicht
- 9: nicht transparente metallische Schicht
- 10: Abschnitt ohne Mottenaugenstruktur
- 11: erster Betrachtungswinkel
- 12: zweiter Betrachtungswinkel
- 13: dritter Betrachtungswinkel
- 14: semitransparente metallische Schicht
- 15: HRI-Schicht

## Patentansprüche

1. Sicherheitselement (1) mit optischen Sicherheitsmerkmalen, geeignet für die Anordnung auf einem flächigen Träger (2), umfassend eine Mottenaugenstruktur (3) und eine Schicht zur Erzeugung eines ersten Farbkippeffekts (4), **dadurch gekennzeichnet,**
**dass** das Sicherheitselement weiters eine reflektierende Schicht (6) aufweist, welche reflektierende Schicht (6) zumindest abschnittsweise direkt auf der Mottenaugenstruktur (3) angeordnet ist und die Schicht zur Erzeugung eines ersten Farbkippeffekts (4) zumindest abschnittsweise überlappend mit der auf der Mottenaugenstruktur (3) angeordneten reflektierenden Schicht (6) angeordnet ist, und
**dass** die Schicht zur Erzeugung eines ersten Farbkippeffekts (4) eine Dünnschichtanordnung ist, umfassend zumindest eine auf der reflektierenden Schicht (6) angeordnete dielektrische Schicht (5) als Abstandsschicht und eine auf der dielektrischen Schicht angeordnete Absorberschicht (8).

2. Sicherheitselement (1) nach Anspruch 1, **dadurch gekennzeichnet, dass** das Sicherheitselement (1) weiters einen flächigen Träger (2) umfasst.

3. Sicherheitselement (1) nach einem der vorhergehenden Ansprüche, **dadurch gekennzeichnet, dass** die reflektierende Schicht (6) eine metallische Schicht (9) mit einem Transmissionsgrad kleiner 20% für sichtbares Licht umfasst.

4. Sicherheitselement (1) nach einem der vorhergehenden Ansprüche, **dadurch gekennzeichnet, dass** die reflektierende Schicht (6) eine semitransparente metallische Schicht (14) mit einem Transmissionsgrad zwischen 20 und 80% bei sichtbarem Licht umfasst.

5. Sicherheitselement (1) nach einem der Ansprüche 1 oder 2, **dadurch gekennzeichnet, dass** die reflektierende Schicht (6) eine HRI-Schicht (15) ist.

6. Sicherheitselement (1) nach einem der vorhergehenden Ansprüche, **dadurch gekennzeichnet, dass** neben der Mottenaugenstruktur (3) zumindest ein Abschnitt (10) ohne Mottenaugenstruktur vorgesehen ist und dass dieser zumindest abschnittsweise die gleiche reflektierende Schicht (6) und die gleiche Dünnschichtanordnung (4) wie die Mottenaugenstruktur (3) aufweist, wobei sich die reflektierende Schicht (6) und die Dünnschichtanordnung (4) im Abschnitt (10) ohne Mottenaugenstruktur zumindest abschnittsweise überlappen.

7. Sicherheitselement (1) nach Anspruch 6, **dadurch gekennzeichnet, dass** sich sowohl die reflektierende Schicht (6) als auch die Dünnschichtanordnung (4), welche einander zumindest teilweise überlappen, von der Mottenaugenstruktur (3) in den Abschnitt (10) ohne Mottenaugenstruktur fortsetzen und mit diesem überlappen.

8. Sicherheitselement (1) nach einem der Ansprüche 1 bis 5, **dadurch gekennzeichnet, dass** neben der Mottenaugenstruktur (3) zumindest ein Abschnitt (10) ohne Mottenaugenstruktur vorgesehen ist und dass dieser zumindest abschnittsweise die gleiche Dünnschichtanordnung (4) wie die Mottenaugenstruktur (3) aufweist, während eine weitere reflektierende Schicht, mit anderen optischen Eigenschaften als die reflektierende Schicht (6) auf der Mottenaugenstruktur (3), im Abschnitt (10) ohne Mottenaugenstruktur als Reflexionsschicht für die Dünnschichtanordnung (4) vorgesehen ist.

9. Sicherheitselement (1) nach Anspruch 8, **dadurch gekennzeichnet, dass** die weitere reflektierende Schicht einen Abstand zur reflektierenden Schicht (6) auf der Mottenaugenstruktur (3) aufweist.

10. Sicherheitselement (1) nach Anspruch 8 oder 9, **dadurch gekennzeichnet, dass** die Dünnschichtanordnung (4) im Abschnitt (10) ohne Mottenaugenstruktur einen Abstand zur Dünnschichtanordnung (4) auf der Mottenaugenstruktur (3) aufweist.

11. Sicherheitselement (1) nach einem der Ansprüche 8 bis 10, **dadurch gekennzeichnet, dass** die weitere reflektierende Schicht eine andere Dicke aufweist als die reflektierende Schicht (6) auf der Mottenaugenstruktur (3).

12. Sicherheitselement (1) nach einem der vorhergehenden Ansprüche, **dadurch gekennzeichnet, dass** dieses so ausgebildet ist, dass in einem ersten Betrachtungswinkel die Mottenaugenstruktur (3) einfallende Strahlung großteils absorbiert und dass die Mottenaugenstruktur (3) in einem zweiten Betrachtungswinkel einfallende Strahlung großteils beugt, um einen zweiten Farbkippeffekt zu erzeugen.

13. Sicherheitselement (1) nach einem der vorhergehenden Ansprüche, **dadurch gekennzeichnet, dass** die Mottenaugenstruktur (3) Mikrostrukturen (7) mit einer Höhe im Bereich von 300 nm bis 700 nm, vorzugweise von 400 nm bis 430 nm, sowie eine Strukturperiode von 250 nm bis 500 nm, vorzugsweise von 350 nm bis 450 nm, aufweist.

14. Sicherheitselement (1) nach einem der vorhergehenden Ansprüche, **dadurch gekennzeichnet, dass** die Mottenaugenstruktur (3) einen ersten Bereich mit einer bestimmten ersten Periodizität der Mottenaugen und neben diesem ersten Bereich einen zweiten Bereich mit einer von dieser ersten Periodizität verschiedenen zweiten Periodizität umfasst.

15. Datenträger oder Wertdokument aufweisend ein Sicherheitselement (1) nach einem der Ansprüche 1 bis 14.
